# EUROPEAN PATENT SPECIFICATION

(11) **EP 1 965 503 B1**
(45) Date of publication and mention of the grant of the patent: **27.07.2011**
(21) Application number: 07445008.1
(22) Date of filing: 28.02.2007
(51) Int. Cl.: H04B 1/18

(54) **Antenna device and portable radio communication device comprising such antenna device**
Antennenvorrichtung und tragbare Funkkommunikationsvorrichtung damit
Dispositif d'antenne et dispositif de communication radio portable comportant un tel dispositif d'antenne

(43) Date of publication of application: 03.09.2008
(73) Proprietor: Laird Technologies AB, 184 25 Åkersberga (SE)
(72) Inventor: Kaikkonen, Andrei, 16471 Kista (SE); Lindberg, Peter, 75229 Uppsala (SE)
(74) Representative: Estreen, Lars J.F.

(56) References cited:
- EP-A- 1 545 013
- GB-A- 2 390 241
- US-A1- 2005 059 371

## Description

### FIELD OF INVENTION

The present invention relates generally to antenna devices and more particularly to an antenna device for use in a radio communication device, such as a mobile phone, which is adapted for radio signals having a relatively low frequency, such as radio signals in the FM band.

### BACKGROUND

Internal antennas have been used for some time in portable radio communication devices. There are a number of advantages connected with using internal antennas, of which can be mentioned that they are small and light, making them suitable for applications wherein size and weight are of importance, such as in mobile phones.

However, the application of internal antennas in a mobile phone puts some constraints on the configuration of the antenna element. In particular, in a portable radio communication device the space for an internal antenna arrangement is limited. These constraints may make it difficult to find a configuration of the antenna that provides for a wide operating band. This is especially true for antennas intended for use with radio signals of relatively low frequencies as the desired physical length of such antennas are large compared to antennas operating with relatively high frequencies.

One specific application operating in a relatively low frequency band is the FM radio application. The FM band is defined as frequencies between 88-108 MHz in Europe or between 76-110 MHz in the USA. Prior art conventional antenna configurations, such as loop antennas or monopole antennas, fitted within the casing of a portable radio communication device will result in unsatisfactory operation in that the antenna either has too bad performance over a sufficiently wide frequency band or sufficient performance over a too narrow frequency band.

EP 1545013 describes a matching device that causes an antenna to match a receiving section arranged to receive signal in a first and a second lower frequency band. The matching device includes a first, second and third inductor as well as a first capacitor. The second inductor has a capacitive impedance in the first frequency band, and has an inductive impedance This matching device can supply a signal in the second frequency band received by the antenna to the receiving section with a small loss. The antenna having a small length can receive a signal of low frequencies and long wavelengths in the second frequency band.

GB 2390241 describes a duplexerless homodyne receiver, suitable for use in a base station of a mobile communications system. In the receiver received signals are supplied to a wideband filter, and the filtered signals are supplied to a first low noise amplifier. The amplified signals are supplied to a first narrowband filter. These filtered signals are supplied to a second low noise amplifier, and the further amplified signals are supplied to a second narrowband filter. These signals, at the received radio frequency, are then supplied to a quadrature demodulator for direct downconversion to baseband. The combination of two low noise amplifiers and two narrowband filters provides a required attenuation of an interferer to avoid saturating the subsequent quadrature demodulator, while also providing enough gain to ensure that the noise figure of the received signal is not degraded.

US 2005/059371 describes a circuit array with an antenna input, a signal input, a signal output and a switch unit, in which the antenna input is connected to a first protective device against electrostatic discharges. The first protective device has an antenna input and a switch output, which are connected to one another by a line, and in which a voltage-limiting element is connected to a ground in parallel to the line.

An FM antenna device is often provided in portable radio communication devices together with one or more other antennas, such as antennas for cellular applications. This puts extra demands on the filtering capability of the FM antenna device and associated circuitry, such as amplifiers.

### SUMMARY OF THE INVENTION

An object of the present invention is to provide an antenna device for use in a portable radio communication device, which has an adequate filtering capability for a frequency band having a relatively low frequency, such as the FM radio band.

The invention is based on the realization that careful choice of filter configuration, together with consideration of the intrinsic impedance of the active antenna circuitry, provides an antenna device having advantageous filtering characteristics.

An antenna device according to the invention is defined by the features of claim 1. Further embodiments are defined in the dependent claims.

A portable radio communication device comprising such an antenna device is also provided in dependent claim 9.

The antenna device according to the invention provides adequate filtering of relatively low frequency RF signals, such as signals in the FM band, received by the radiating element of an antenna device.

In a preferred embodiment, the second filter stage is a low pass filter, with keeps the number of filter components to a minimum.

Further preferred embodiments are defined in the dependent claims.

### BRIEF DESCRIPTION OF DRAWINGS

The invention is now described, by way of example, with reference to the accompanying drawings, in which:
FIG. 1 is a schematic diagram showing an antenna device according to the invention connected to an FM receiver circuit;
FIG. 2 is a diagram showing in more detail a first embodiment of an antenna device according to the invention;
FIG. 3 is a graph showing the attenuation of an RF signal for an antenna device with and without an inventive filter arrangement;
FIG. 4 is a diagram showing a second embodiment of an antenna device according to the invention;
FIG. 5 is a schematic diagram showing an antenna device according to an alternative embodiment of the invention connected to an FM receiver circuit; and
FIG. 6 is a perspective partially cut-away view of an antenna device according to the invention mounted in a portable radio communication device.

### DETAILED DESCRIPTION OF THE INVENTION

In the following, a detailed description of preferred embodiments of an antenna device and a portable radio communication device according to the invention will be given.

In the following description and claims, the term radiating element is used. It is to be understood that this term is intended to cover electrically conductive elements arranged for receiving radio signals.

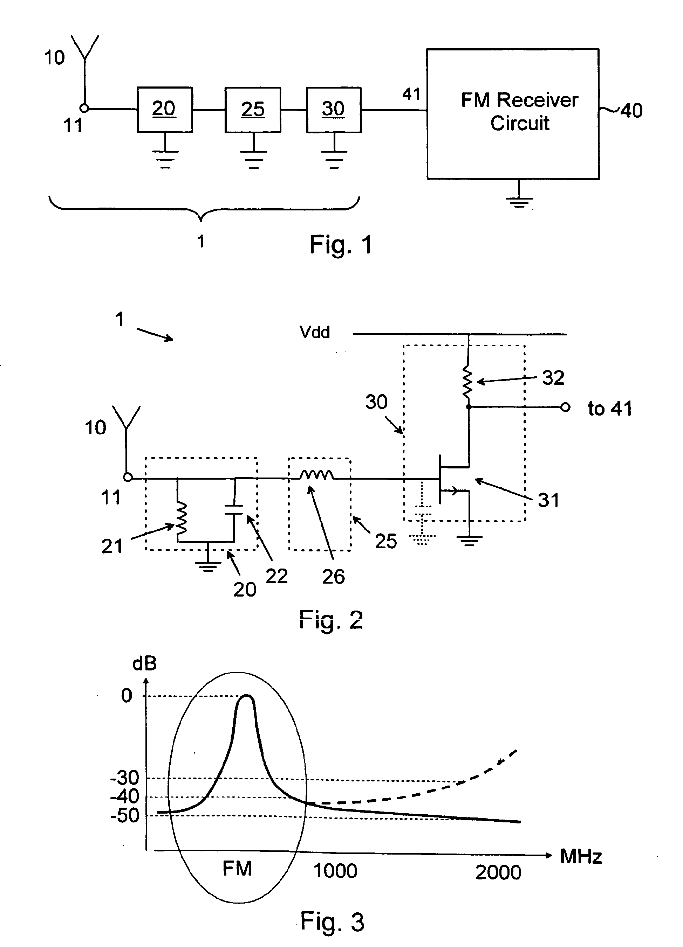

First with reference to FIG. 1, the general configuration of an antenna device 1 according to the invention is shown. It comprises a radiating element 10 in the form of a non-resonant piece of electrically conductive material, such as sheet metal or flex film. An example of the size thereof is 30 times 10 millimeters, placed on the back cover of a portable radio communication device. The radiating element has a feeding portion 11 connected to a first filter stage 20 arranged to block signals having a frequency above the operating frequency band and to allow signals in the operating frequency band, i.e., a band pass filter. It is preferred that the filter stage acts as a band pass filter for signals in the operating frequency band. In the case of operation in the FM band, the pass band is between 88-108 MHz in Europe or between 76-110 MHz in the USA.

One function of the filter stage 20 is to act as ESD protection circuit, effectively blocking the major part of ESD pulse spectrum. The filter also eliminates or at least reduces interference from electro magnetic interference (EMI) signals and possibly signals from other antennas provided in the same radio communication device, such as cellular GSM antennas operating at frequencies well above the FM antenna.

A second filter stage 25 is arranged to block signals above the operating frequency band, i.e., a low pass filter. The function thereof will be further described below.

An amplifier stage 30 is arranged after the filter stages for amplifying signals received by the radiating element 10.

Signals received and amplified by the antenna device 1 are supplied to an FM receiver circuit 40, which could be a conventional circuit manufactured by Philips Semiconductors and sold under the name HVQFN40. The FM receiver circuit comprises an RF input 41, which is connected to the amplifier 30.

It is preferred that the filter and amplifier stages are provided relatively close to the radiating element 10 in order to minimize parasitic effects and interference from external sources.

An implementation of the general idea expressed in FIG. 1 will now be described with reference to FIG. 2. The first filter stage 20 is here implemented as a grounded LC circuit comprising an inductor 21 and a capacitor 22 connected in parallel and between the feeding portion 11 and ground. In one embodiment, the inductance of inductor 21 is approximately 40 nH and the capacitance of capacitor 22 is approximately 60 pF.

The inductor 21 and the capacitor 22 together form a band pass filter for the FM band. The filtering or attenuation effect on an RF signal received by the radiating element 10 is shown in Fig. 3, wherein the FM band filtering is indicated inside an ellipse.

In the frequency range above the FM band, i.e., above approximately 100 MHz, the attenuation effect without further filtering components than the inductor 21 and the capacitance 22 is shown with a dashed line. It is seen that the attenuation in the frequency bands of cellular applications, such as GSM1800/1900 and WCDMA 2.1 GHz, is poor. This is due to parasitic effects in filter components and the intrinsic impedance of the amplifier circuitry present in active antenna devices comprising transistors etc, such as special source and load impedances.

To remedy this deficiency, the low pass filter stage 25 is provided after the band pass filter stage 20. This second filter stage comprises in the preferred embodiment a series inductor 26 connected in the RF signal path after the first filter stage 20. A preferred inductance value of inductor 26 is in the range of 50-200 nH, and more preferably in the order of 100 nH.

The effect of the low pass filter stage 25 is shown in FIG. 3 with the solid graph above the FM band. It is thus seen that the combined first and second filter stages 20 and 25 together provide adequate filtering of the RF signals received by the inventive antenna device 1.

The amplifier stage 30 comprises a field effect transistor (FET) 31 with the gate connected to the filter 20, the source connected directly to ground and the drain connectable to the input 41 of the FM receiver circuit 40. There is also a load resistor 32 connected between the drain of the transistor 31 and the feed voltage Vdd.

One intrinsic impedance of the amplifier stage 30 which affects the filtering characteristic is the capacitance (shown with dashed lines in FIG. 2) between gate and source of the transistor 31. This capacitance can take a value of approximately 1.5 pF or more.

In order for the antenna device 1 to operate, the transistor preferably has a minimum noise figure below 1 dB and a gain above 15 dB in the operating frequency band. Also, it is preferred that the transistor has a noise resistance Rn of less than 10 Ohms in order to achieve highest possible signal reception quality for arbitrary antenna configurations.

An alternative implementation of the inventive idea in the form of a second embodiment will now be described with reference to FIG. 3. Like the above described first embodiment, this antenna device comprises a radiating element 110 having a feed portion 111 connected to a band pass filter stage 120 and a low pass filter stage 125 with components corresponding to those of the first embodiment with the difference that the capacitor 22 of the first embodiment has been replaced by a varactor 122 to make the band pass filter tunable. However, in this second embodiment the amplifier stage is a so-called cascode amplifier 130. This cascode amplifier comprises a field effect transistor 131 with the gate connected to the filter 120, the source connected directly to ground and the drain connected to the source of a second field effect transistor 133. The gate of the second transistor 133 is connected to ground via a capacitor 134. The drain of the second transistor 133 is connectable to the input 41 of the FM receiver circuit 40. There is also a load resistor 132 connected between the drain of the second transistor 133 and the feed voltage Vdd.

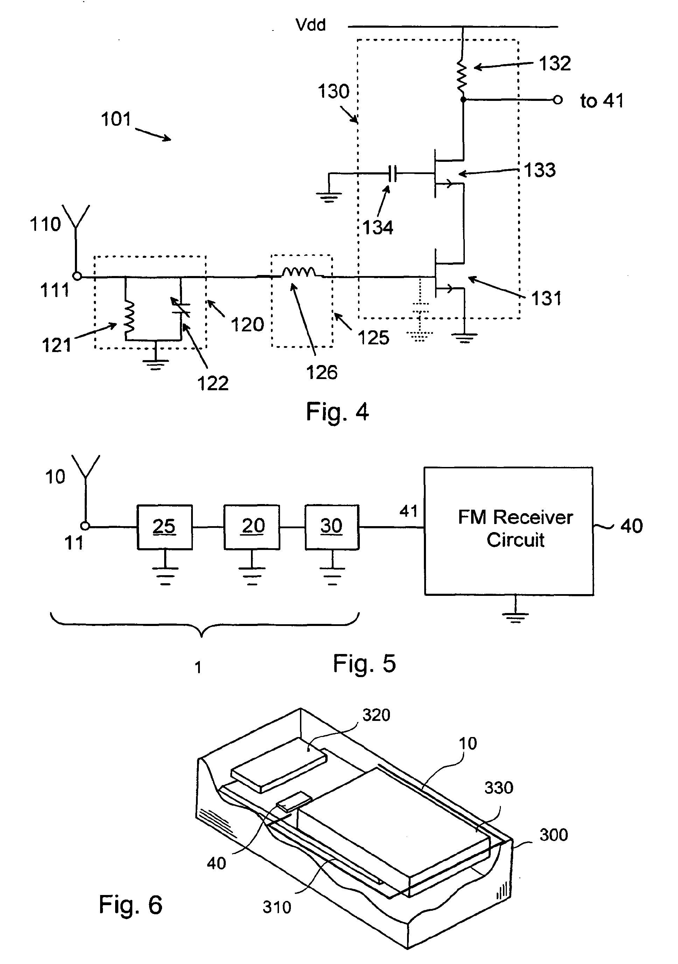

In the above described embodiments, the band pass filter 20 has been placed in front of the low pass filter 25. In an alternative embodiment shown in FIG. 5 the positions of the band pass filter 20 and the low pass filter 25 are reversed, i.e., the low pass filter is placed in front of the band pass filter. This embodiment operates in all other aspects as the above described embodiments.

A preferred position of the antenna device according to the invention as described above with reference to FIGs. 1-5 will now be described with reference to FIG. 6, wherein the general outlines of the casing of a portable radio communication device 300, such as a mobile phone, is depicted. The casing is shown partially cut away so as to not obscure the position of the antenna device, which could be any of the devices described with reference to FIGS 1-5.

A printed circuit board (PCB) 310 is provided in the casing, having the circuits (not shown) conventionally found in a mobile phone. On the PCB there is also mounted the FM receiver circuit 40. In the upper portion of the casing there is provided an antenna radiating element 320 for receiving and transmitting RF signals for a cellular mobile phone system, such as a GSM system.

A battery package 330 is also provided towards the back of the casing 300. This battery package is connected to the PCB by means of connectors (not shown). FM antenna radiator is preferably placed on the back cover. The radiator can comprise a thin stripe going around the battery. When the back cover is made of metal, it can directly be utilized as the FM antenna radiator element. Alternatively, a headset cable can be used as the FM antenna radiator element.

Preferred embodiments of an antenna device according to the invention have been described. However, the person skilled in the art realizes that these can be varied within the scope of the appended claims without departing from the inventive idea.

It is realized that the shape and size of the antenna device according to the invention can be varied within the scope defined by the appended claims. Thus, the exact antenna configurations can be varied so as to correspond to the shape of the radio communication device, desired performance etc.

The above-described embodiments of an antenna device according to the invention have been described as antenna devices adapted for reception of radio signals in the FM frequency band. However, other applications are also possible, such as use for digital video broadcasting (DVB) signals in the frequency range of about 400-800 MHz.

Although an antenna device for a portable radio communication device has been described with reference to its use in a mobile phone, it will be appreciated that the inventive idea is also applicable to other portable radio communication devices, also devices that are portable but primarily intended for stationary use. Examples thereof could be small clocks, such as travel alarm clocks, TV receivers, or game consoles. Yet a possible application of the antenna device according to the invention is in personal digital assistants (PDAs), MP3 and CD players, FM radio receivers, and laptop computers. A further application is in cars. Thus, the term portable radio communication device should be construed in a broad sense.

Specific filter configurations have been described. It will be realized that the inventive idea is applicable also with different filter configurations as long as the overall filter characteristics, i.e., band pass and low pass, are maintained. Also, the second filter stage has been described as a low pass filter. This filter could also be replaced by a band pass filter without departing from the inventive idea since the important feature of this second filter stage is that it attenuates signals above the operating frequency band.

## Claims

1. An antenna device for a portable radio communication device adapted for receiving radio signals in at least an FM frequency band, said antenna device comprising
- a radiating element (10; 110) in the form of an electrically conductive element arranged for receiving radio signals,
- a first filter stage (20; 120), and
- an amplifier stage (30; 130) connectable to a receiver device (40) for radio signals in the FM frequency band,
- wherein the first filter stage is connected between the radiating element and the amplifier stage,
- a second filter stage (25; 125) connected between the radiating element and the amplifier stage,
- wherein the second filter stage is arranged to block signals having a frequency above the FM frequency band,
**characterized by**
- the first filter stage being a band pass filter acting as a band pass filter for signals in the FM frequency band arranged to block signals having a frequency above and below the FM frequency band and to allow signals in the FM frequency band.

2. The antenna device according to claim 1, wherein the second filter stage (25) is a low pass filter.

3. The antenna device according to claim 2, wherein the second filter stage (25; 125) comprises a series inductor (26; 126) connected in the RF signal path.

4. The antenna device according to claim 3, wherein the series inductor (26; 126) has a value in the range of 50-200 nH.

5. The antenna device according to claim 4, wherein the series inductor (26; 126) has a value in the order of 100 nH.

6. The antenna device according to claim 1, wherein the second filter stage (25; 125) is a band pass filter.

7. The antenna device according to any of claims 1-6, wherein the second filter stage (25; 125) is interconnected between the first filter stage (20; 120) and the amplifier stage (30; 130),

8. The antenna device according to any of claims 1-7, wherein the amplifier stage (30; 130) comprises a cascode amplifier.

9. A portable radio communication device comprising an antenna device according to claim 1.

## Patentansprüche

1. Antennenvorrichtung für eine tragbare Funkkommunikationsvorrichtung, welche dafür geeignet ist, in mindestens einem FM-Frequenzband Funksignale zu empfangen, wobei die Antennenvorrichtung das Folgende umfasst:
- ein Strahlungselement (10; 110) in Form eines elektrisch leitfähigen Elements, welches dafür eingerichtet ist, Funksignale zu empfangen,
- eine erste Filterstufe (20; 120) und
- eine Verstärkerstufe (30; 130), welche mit einer Empfängervorrichtung (40) für Funksignale in dem FM-Frequenzband verbunden werden kann,
- wobei die erste Filterstufe zwischen das Strahlungselement und die Verstärkerstufe geschaltet ist,
- eine zweite Filterstufe (25; 125), welche zwischen das Strahlungselement und die Verstärkerstufe geschaltet ist,
- wobei die zweite Filterstufe dafür eingerichtet ist, Signale einer Frequenz oberhalb des FM-Frequenzbandes zu blockieren,
**dadurch gekennzeichnet, dass**
- es sich bei der ersten Filterstufe um einen Bandpassfilter handelt, welcher als Bandpassfilter für Signale in dem FM-Frequenzband wirkt, der dafür eingerichtet ist, Signale einer Frequenz oberhalb und unterhalb des FM-Frequenzbandes zu blockieren und Signale in dem FM-Frequenzband zuzulassen.

2. Antennenvorrichtung nach Anspruch 1, wobei es sich bei der zweiten Filterstufe (25) um einen Tiefpassfilter handelt.

3. Antennenvorrichtung nach Anspruch 2, wobei die zweite Filterstufe (25; 125) einen in Serie geschalteten Induktor (26; 126) umfasst, der in den RF-Signalweg geschaltet ist.

4. Antennenvorrichtung nach Anspruch 3, wobei der in Reihe geschaltete Induktor (26; 126) einen Wert im Bereich von 50 bis 200 nH aufweist.

5. Antennenvorrichtung nach Anspruch 4, wobei der in Reihe geschaltete Induktor (26; 126) einen Wert in der Größenordnung von 100 nH aufweist.

6. Antennenvorrichtung nach Anspruch 1, wobei es sich bei der zweiten Filterstufe (25) um einen Bandpassfilter handelt.

7. Antennenvorrichtung nach einem der Ansprüche 1 bis 6, wobei die zweite Filterstufe (25; 125) zwischen die erste Filterstufe (20; 120) und die Verstärkerstufe (30; 130) geschaltet ist.

8. Antennenvorrichtung nach einem der Ansprüche 1 bis 7, wobei die Verstärkerstufe (30; 130) einen Kaskodenverstärker umfasst.

9. Tragbare Funkkommunikationsvorrichtung, welche eine Antennenvorrichtung nach Anspruch 1 umfasst.

## Revendications

1. Dispositif d'antenne pour un dispositif de communication radio portable adapté pour recevoir des signaux radio dans au moins une bande de fréquence FM, ledit dispositif d'antenne comprenant
- un élément rayonnant (10 ; 110) sous forme d'un élément électriquement conducteur agencé pour recevoir des signaux radio,
- un premier étage de filtre (20 ; 120), et
- un étage amplificateur (30 ; 130) pouvant être connecté à un dispositif récepteur (40) pour signaux radio dans la bande de fréquence FM,
- dans lequel le premier étage de filtre est connecté entre l'élément rayonnant et l'étage amplificateur,
- un second étage de filtre (25 ; 125) connecté entre l'élément rayonnant et l'étage amplificateur,
- dans lequel le second étage de filtre est agencé pour bloquer les signaux présentant une fréquence supérieure à la bande de fréquence FM,
**caractérisé en ce que**
- le premier étage de filtre est un filtre passe-bande agissant en tant que filtre passe-bande pour signaux dans la bande de fréquence FM agencé pour bloquer les signaux présentant une fréquence supérieure et inférieure à la bande de fréquence FM et pour autoriser les signaux dans la bande de fréquence FM.

2. Dispositif d'antenne selon la revendication 1, dans lequel le second étage de filtre (25) est un filtre passe-bas.

3. Dispositif d'antenne selon la revendication 2, dans lequel le second étage de filtre (25 ; 125) comprend une inductance en série (26 ; 126) connectée dans le trajet de signal RF.

4. Dispositif d'antenne selon la revendication 3, dans lequel l'inductance en série (26 ; 126) présente une valeur dans la plage allant de 50 à 200 nH.

5. Dispositif d'antenne selon la revendication 4, dans lequel l'inductance en série (26 ; 126) présente une valeur de l'ordre de 100 nH.

6. Dispositif d'antenne selon la revendication 1, dans lequel le second étage de filtre (25 ; 125) est un filtre passe-bande.

7. Dispositif d'antenne selon l'une quelconque des revendications 1 à 6, dans lequel le second étage de filtre (25 ; 125) est interconnecté entre le premier étage de filtre (20 ; 120) et l'étage amplificateur (30 ; 130).

8. Dispositif d'antenne selon l'une quelconque des revendications 1 à 7, dans lequel l'étage amplificateur (30 ; 130) comprend un amplificateur cascode.

9. Dispositif de communication radio portable comprenant un dispositif d'antenne selon la revendication 1.
